# EUROPEAN PATENT APPLICATION

(11) **EP 4 668 347 A1**
(43) Date of publication of application: **24.12.2025**
(21) Application number: 24886187.4
(22) Date of filing: 29.10.2024
(51) Int. Cl.: H01M 4/04, F26B 21/06, G05D 23/30

(54) **ELECTRODE DRYING SYSTEM AND ELECTRODE DRYING METHOD**

(30) Priority: 30.10.2023 KR 20230146755
(71) Applicant: LG Energy Solution, Ltd., Seoul 07335 (KR)
(72) Inventor: KO, Myung Jun, Daejeon 34122 (KR); YANG, Hee Kwang, Daejeon 34122 (KR)
(74) Representative: Plasseraud IP
(86) International application number: PCT/KR2024/016597
(87) International publication number: WO 2025/095513

(57) **Abstract**

The present application provides an electrode drying system and an electrode drying method that number adjustment of first drying zones and heat quantity compensation in drying zones around the first drying zones can be automatically performed by determining locations of first drying zones in a constant rate section state, to which a drying target electrode moves, based on an electrode surface temperature, and adjusting the desired adhesive force and drying rate of the drying target electrode.

## Description

### Technical Field

The present invention relates to an electrode drying system and an electrode drying method.

This application claims the benefit of priority based on Korean Patent Application No. 10-2023-0146755 dated October 30, 2023, the disclosure of which is incorporated herein by reference in its entirety.

### Background Art

As the technology development and demand for mobile devices increase, the demand for secondary batteries which are rechargeable and capable of miniaturization and capacity enlargement rapidly increases. In addition, lithium secondary batteries with high energy density and voltage among secondary batteries have been commercialized and are widely used.

The lithium secondary battery is composed of a structure that an electrolyte containing a lithium salt is impregnated in an electrode assembly in which a porous separator is interposed between a positive electrode and a negative electrode, each of which has an active material applied on an electrode current collector. The electrode is manufactured by applying a slurry in which an active material, a binder, and a conductive material are dispersed in a solvent to a current collector, followed by drying and rolling (pressing).

Generally, adhesive force between the current collector and the slurry is determined during the drying process. The adhesive force corresponds to a major quality item for preventing thermal wrinkles of the electrode.

The drying process is performed while sequentially passing a drying target electrode through multiple drying zones arranged along one direction.

To increase the adhesive force, migration of the binder during the drying process should be minimized by designing constant rate sections where a surface temperature of the electrode is maintained constant to be long.

Specifically, among the multiple drying zones, the drying zones where the surface temperature of the electrode is maintained constant were identified as constant rate sections, and then the constant rate sections were designed to be long by lowering the drying temperature of the relevant drying zones.

Up to now, as the method of identifying the drying zone corresponding to the constant rate section, there was no way to check with a user's naked eyes whether the electrode surface during drying is changed from a glossy surface to a matte surface, and such a method had an inconvenience that the user had to visually check it every time and a problem that the result values were different for each user, whereby accuracy was lowered.

### Disclosure

### Technical Problem

Unlike the existing drying method of identifying a constant rate section with naked eyes, it is a technical problem of the present invention to provide an electrode drying system and an electrode drying method that number adjustment of first drying zones and heat quantity compensation in drying zones around the first drying zones can be automatically performed by determining locations of first drying zones in a constant rate section state, to which a drying target electrode moves, based on an electrode surface temperature, and adjusting the desired adhesive force and drying rate of the drying target electrode.

### Technical Solution

In order to solve the problem, according to one example of the present invention, an electrode drying system is provided, which comprises a plurality of drying zones, which are disposed along one direction, each including a drying space in which a drying target electrode is dried and a heat supply part provided to provide a preset heat supply quantity to the drying space, a moving part moving the drying target electrode to be dried sequentially through the plurality of drying zones, a plurality of temperature sensors provided in each of the plurality of drying zones and measuring a surface temperature of the drying target electrode in each of the drying zones, a determining part determining a plurality of first drying zones among the plurality of drying zones in which the drying target electrode moves in a constant rate state (T state) where a change of the surface temperature is maintained below a predetermined value based on the surface temperature of the drying target electrode measured by the plurality of temperature sensors, and a first adjustment part provided to adjust a heat supply quantity supplied from the heat supply part in each of the first drying zones, to increase or decrease the number of first drying zones determined in the determining part.

Also, the determining part may determine at least one drying zone located in the rear of a second drying zone having the highest electrode surface temperature among the plurality of drying zones as the first drying zones.

In addition, a difference (T2-T1) between the electrode surface temperature (T2) of the second drying zone and the electrode surface temperature (T1) of the first drying zone may be 5°C or less.

Furthermore, the first adjustment part may adjust the heat supply quantity of each first drying zone to a first heat supply quantity (A) lower than the preset heat supply quantity, to increase the number of first drying zones determined in the determining part.

Also, it may comprise a second adjustment part adjusting a heat supply quantity of at least one third drying zone located in the front of the first drying zone and a heat supply quantity of at least one fourth drying zone located in the rear of the first drying zone, respectively, to be higher than the preset heat supply quantity, based on the first heat supply quantity (A).

In addition, the second adjustment part may adjust the heat supply quantity of the third drying zone to a second heat supply quantity (B) higher than the preset heat supply quantity by 25% to 50% of the first heat supply quantity, and may adjust the heat supply quantity of the fourth drying zone to a third heat supply quantity (C) higher than the preset heat supply quantity by 25% to 50% of the first heat supply quantity (A).

Furthermore, the second adjustment part may adjust the heat supply quantity of the third drying zone and the heat supply quantity of the fourth drying zone, respectively, to be higher than the preset heat supply quantity, based on a difference between a drying rate (D1) of the drying target electrode in which the drying has been completed sequentially through the plurality of drying zones and a preset target drying rate (D0).

Also, the second adjustment part may adjust the heat supply quantity of the third drying zone and the heat supply quantity of the fourth drying zone, respectively, to be higher than the preset heat supply quantity, until the difference between the drying rate (D1) of the drying target electrode and the preset target drying rate (D0) is adjusted within a tolerance range.

In addition, the drying target electrode may be a negative electrode comprising a current collector and a negative electrode slurry layer provided on the current collector.

According to another example of the present application, it provides an electrode drying method using the above-described electrode drying system, comprising a determination step of determining a plurality of first drying zones among a plurality of drying zones in which a drying target electrode moves in a constant rate state (T state) where a change of a surface temperature is maintained below a predetermined value, and a first adjustment step of adjusting a heat supply quantity supplied from a heat supply part in each of the first drying zones, to increase or decrease the number of the first drying zones determined in the determination step.

Also, in the method, the determination step may determine at least one drying zone located in the rear of a second drying zone having the highest electrode surface temperature among the plurality of drying zones (100) as the first drying zone.

In addition, in the method, a difference (T2-T1) between the electrode surface temperature (T2) of the second drying zone and the electrode surface temperature (T1) of the first drying zone may be 5°C or less.

Furthermore, in the method, the first adjustment step may adjust the heat supply quantity of each first drying zone to a first heat supply quantity (A) lower than the preset heat supply quantity, to increase the number of first drying zones determined in the determination step.

In addition, in the method, it may comprise a second adjustment step of adjusting a heat supply quantity of at least one third drying zone located in the front of the first drying zone and a heat supply quantity (C) of at least one fourth drying zone located in the rear of the first drying zone, respectively, to be higher than the preset heat supply quantity, based on the first heat supply quantity (A).

### Advantageous Effects

The electrode drying system according to the present application has an advantage in which the drying quality of the electrode, efficiency of the drying process, and productivity of the drying process are excellent, as number adjustment of the first drying zones and heat quantity compensation in drying zones around the first drying zones are automatically performed by determining locations of first drying zones in a constant rate section state, to which a drying target electrode moves, based on an electrode surface temperature, and adjusting the desired adhesive force and drying rate of the drying target electrode.

### Description of Drawings

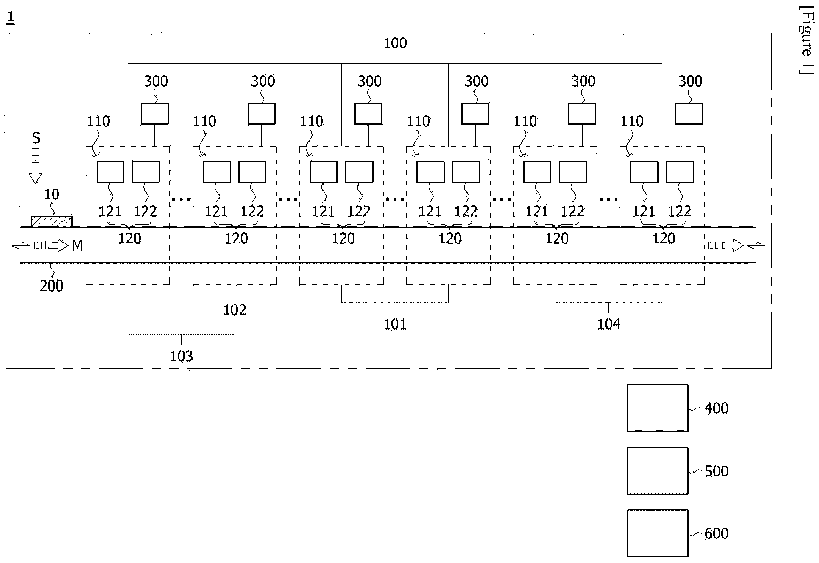

Figure 1 is a configuration diagram of an electrode drying system according to one example of the present invention.

### Mode for Invention

Hereinafter, an electrode drying system according to one example of the present invention will be described in detail with reference to the attached drawing.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

Figure 1 is a configuration diagram of an electrode drying system (1) according to one example of the present invention.

Referring to Figure 1, the electrode drying system (1) comprises a plurality of drying zones (100), a moving part (200), a plurality of temperature sensors (300), a determining part (400), and a first adjustment part (500).

The plurality of drying zones (100) is disposed along one direction, and each comprises a drying space (110) where the drying target electrode (10) is dried, and a heat supply part (120) provided to provide a preset heat supply quantity to the drying space (110). The one direction may be a moving direction of the moving part (200).

In this document, the 'one direction' refers to a traveling direction (M) in which the target electrode (10) passes through the plurality of drying zones (100) or a migration path of the moving part (200).

The above-described plurality of drying zones (100) may be configured so that the drying target electrode passes through, and may comprise a chamber (or drying room) providing a drying space (110). The chamber may further comprise an air supply fan forming an air supply flow from the outside, an exhaust fan forming an exhaust flow from the inside of the chamber, and a circulation fan forming a circulation flow inside the chamber. The chambers may be disposed at a predetermined interval along one direction on the migration path (M) of the moving part (200).

The plurality of drying zones (100) may be, for example, 10 or more, 20 or more, 30 or more, and may preferably be 10.

The moving part (200) moves the drying target electrode (10) to be dried through the plurality of drying zones (100) sequentially. The moving part (200) may move the drying target electrode (10) along one direction (M). The moving part (200) may intermittently stop moving so that the drying target electrode stays within the plurality of drying zones (100) for a certain time, or may move the drying target electrode through the drying zones at a slow speed. As one example, the moving part (200) may comprise a plurality of transfer rolls, and may be configured in a roll-to-roll manner that the plurality of transfer rolls continuously transfers the drying target electrode (10).

The drying target electrode (10) may be one obtained by applying a slurry, in which an active material, a binder, and a conductive material are dispersed in a solvent, on a current collector (or an electrode sheet), and the application may be performed by coating or rolling. If the drying target electrode is a positive electrode, it may be one obtained by coating or rolling a positive electrode slurry on a positive electrode current collector (positive electrode sheet), and if the drying target electrode is a negative electrode, it may be one obtained by coating or rolling a negative electrode slurry on a negative electrode current collector (negative electrode sheet). The positive and negative electrode slurries may each have an active material, a binder, and a conductive material, which are dispersed in a solvent.

The drying target electrode (10) may have an increasing drying rate as it passes through a plurality of drying zones. For example, if the drying target electrode exhibits a drying rate of 1% or less when moving through a first drying zone where it first enters, it may exhibit a drying rate of 1% or more when moving through a second drying zone located after the first drying zone.

The plurality of temperature sensors (300) may be provided in the plurality of drying zones (100), respectively, and may measure the surface temperature of the drying target electrode (10) within each drying zone. The plurality of temperature sensors (300) may measure the surface temperature of the electrode (10) moving the drying zones, which are installed, respectively, in real time, and as one example, the temperature sensor may be an infrared thermometer, but is not limited thereto, and various known equipment capable of measuring the surface temperature of the electrode may be used.

The determining part (400) determines a plurality of first drying zones (101) among the plurality of drying zones (100) in which the drying target electrode moves in a constant rate state (T state) where a surface temperature change is maintained below a predetermined value, based on the surface temperature of the drying target electrode (10) measured by the plurality of temperature sensors (300). For example, the drying target electrode in the constant rate state may have a temperature change of 0. 1°C or less, 0.5°C or less, or 1°C or less within the relevant drying zone.

Conventionally, the constant rate state of the drying target electrode must be determined visually each time, whereas the present invention can increase the accuracy of determining the constant rate section by determining the drying zone in which the drying target electrode in the constant rate state moves based on the surface temperature of the electrode.

Specifically, the electrode drying process may be composed of a preheating section (a section in which a temperature increases while a water content decreases slightly), a constant rate section (a section in which a temperature is maintained constant while a water content decreases significantly), and a decrease rate section (a section in which a temperature increases while a water content decreases slightly).

Since the binder moves a lot to the surface of the electrode coating layer (slurry layer) in the section where the water content decreases significantly, a binder migration phenomenon occurs in the constant rate section.

In this instance, as a constant rate drying time increases, a binder migration speed decreases, and as a constant rate drying speed increases, the binder migration speed increases. That is, if the preheating section in the electrode drying becomes shorter, the constant rate drying time increases relatively, and as a result, the binder migration phenomenon can decrease.

The first drying zones (101) determined from the determining part (400) may be at least 2 or more, 3 or more, or 4 or more. The length of the constant rate section may be determined according to the number of the first drying zones (101). For example, if the number of the first drying zones (101) increases, the constant rate section may be extended, and if the number of the first drying zones (101) decreases, the constant rate section may be shortened.

The drying target electrode (10) sequentially passing through the plurality of drying zones may sequentially reach the preheating section, the constant rate section, and the decrease rate section. For example, there may be drying zones corresponding to at least one preheating section in the front of the first drying zones (101), and there may be drying zones corresponding to at least one decrease rate section in the rear of the first drying zones (101).

The first adjustment part (500) is provided to adjust the heat supply quantity supplied from the heat supply part (120) in each first drying zone (101), to increase or decrease the number of first drying zones (101) determined in the determining part (400). The first adjustment part (500) may adjust the adhesive force of the drying target electrode by increasing or decreasing the number of first drying zones (101). For example, as the number of first drying zones (101) increases, the constant rate section becomes longer, whereby the adhesive force of the drying target electrode may be adjusted to be high, and as the number of first drying zones (101) decreases, the constant rate section becomes shorter, whereby the adhesive force of the drying target electrode may be adjusted to be low.

In the present invention, the adhesive force of the drying target electrode means the adhesive force between the current collector and the slurry in the drying target electrode.

Unlike the existing manual method of visually determining the surface temperature of the drying target electrode, the electrode drying system according to the present invention may be automatically performed by algorithmizing processes of determining first drying zones (101) based on the surface temperature of the drying target electrode and adjusting the number of the first drying zones (101).

In one example, the determining part (400) may determine at least one drying zone located in the rear of a second drying zone (102) having the highest electrode surface temperature among the plurality of drying zones (100) as the first drying zones (101).

In the present invention, the 'front' and 'rear' of the first drying zone (101) may indicate relative positions based on the entry portion (S) of the drying target electrode. For example, when comparing positions of two drying zones, a drying zone located close to the entry portion (S) of the drying target electrode may be expressed as being relatively 'in the front' (also referred to as the 'upstream' side), and a drying zone located far from the entry portion (S) of the drying target electrode may be expressed as being relatively 'in the rear' (also referred to as the 'downstream' side).

In one specific example, the difference (T2-T1) between the electrode surface temperature (T2) of the second drying zone (102) and the electrode surface temperature (T1) of the first drying zone (101) may be 5°C or less. For example, the determining part (400) may determine drying zones having a difference of 5°C or less from the electrode surface temperature of the second drying zone (102) as the first drying zones (101). When there are 10 drying zones, the second drying zone (102) may be the third or fourth drying zone.

More specifically, when the electrode surface temperature of the second drying zone (102) is 59°C, the determining part (400) may determine the drying zones having an electrode surface temperature of 54°C or more while being positioned in the rear (downstream side) of the second drying zone (102) as the first drying zones (101).

The electrode surface temperature (T2) of the second drying zone (102) means the electrode surface temperature of the drying target electrode during staying or moving within the second drying zone (102), which may be measured by the temperature sensor (300) installed in the second drying zone (102). Similarly, the electrode surface temperature (T1) of the first drying zone means the electrode surface temperature of the drying target electrode during staying or moving within the first drying zone (101), which may be measured by the temperature sensor (300) installed in the first drying zone (120). In the present invention, for convenience, the reference numerals of temperature sensors installed in different drying zones are equally indicated as '300.'

To increase the number of first drying zones (101) determined in the determining part (400), the first adjustment part (500) may adjust the heat supply quantity of each first drying zone (101) to a first heat supply quantity (A) lower than the preset heat supply quantity. Conversely, to decrease the number of first drying zones (101) determined in the determining part (400), the first adjustment part (500) may adjust the heat supply quantity of each first drying zone (101) to a first heat supply quantity (A) higher than the preset heat supply quantity. The first adjustment part (500) adjusts the heat supply quantity of the first drying zone (101) to be higher or lower than the preset heat supply quantity, whereby it is possible to provide a drying target electrode having the desired adhesive force.

Meanwhile, if the heat supply quantity of the first drying zone (101) is adjusted to the first heat supply quantity (A) lower than the preset heat supply quantity, the drying target electrode may exhibit a lower drying rate than the case where the heat supply quantity is preset.

That is, the drying rate may be lowered as the adhesive force of the drying target electrode increases. The drying rate thus lowered may be increased by heat quantity compensation increasing the heat supply quantity of the drying zone around the first drying zone (101).

The electrode drying system according to the present application may comprise a second adjustment part (600) adjusting a heat supply quantity of at least one third drying zone (103) located in the front (upstream side) of the first drying zone (101) and a heat supply quantity of at least one fourth drying zone (104) located in the rear of the first drying zone (101), respectively, to be higher than the preset heat supply quantity based on the first heat supply quantity (A). For heat quantity compensation with respect to the first heat supply quantity (A), the second adjustment part (600) may adjust the heat supply quantity of at least one third drying zone (103) located in the front of the first drying zone (101) and the heat supply quantity of at least one fourth drying zone (104) located in the rear of the first drying zone (101), respectively, to be higher than the preset heat supply quantity.

The drying target electrode in the third drying zone (103) may be in the preheating section state, and the drying target electrode in the fourth drying zone (104) may be in the decrease rate section state. The length of the preheating section may be determined according to the number of third drying zones (103), and the length of the decrease rate section may be determined according to the number of fourth drying zones (104). For example, if the number of third drying zones (103) increases, the length of the preheating section may be extended, and if the number of fourth drying zones (104) increases, the length of the decrease rate section may be extended. In addition, the above-mentioned second drying zone (102) is positioned in the front of the first drying zone (101), so that it may be included in the third drying zone (103).

In one specific example, the second adjustment part (600) may adjust the heat supply quantity of the third drying zone (103) to a second heat supply quantity (B) higher than the preset heat supply quantity by 25% to 50% of the first heat supply quantity (A), and may adjust the heat supply quantity of the fourth drying zone (104) to a third heat supply quantity (C) higher than the preset heat supply quantity by 25% to 50% of the first heat supply quantity (A).

For example, when the first heat supply quantity (A) is lower by 'x' than the preset heat supply quantity, the second heat supply quantity (B) and the third heat supply quantity (C) may each be adjusted to be 0.25 to 0.5 x higher than the preset heat supply quantity.

The second heat supply quantity (B) of the third drying zone (103) and the third heat supply quantity (C) of the fourth drying zone (104) may each be higher than the preset heat supply quantity by 25%, 30%, 35%, 40%, 45%, or 50% of the first heat supply quantity (A).

The heat supply part (120) may comprise an infrared heater (121) supplying radiant heat to the drying space (110), and a hot air blower (122) supplying convective heat to the drying space (110).

The infrared heater (121) may be a mid-infrared heater (121) or a near-infrared heater (121). Here, the mid-infrared heater (121) is a heater emitting mid-infrared rays with a wavelength of approximately 2 to 5 µm, and the near-infrared heater (121) means a heater emitting near-infrared rays with a wavelength of approximately 0.7 to 1.5 µm.

The first adjustment part (500) may increase the number of first drying zones (101) by lowering the heat supply quantities of the radiant heat of the infrared heater (121) and the convective heat of the hot air blower (122), and may provide the heat quantity compensation by increasing the heat supply quantities of the radiant heat of the infrared heater (121) and the convective heat of the hot air blower (122) of other drying zones located in the front and rear of the first drying zone (101).

In the present invention, the heat supply quantity may comprise the heat supply quantity of the radiant heat of the infrared heater (121) and the heat supply quantity of the convective heat of the hot air blower (122). The heat supply quantity of the radiant heat may be determined according to the temperature (°C) of the infrared heater (121), and the heat supply quantity of the convective heat in the hot air blower may be determined according to a fan speed (RPM).

For example, the first adjustment part (500) may lower the heat supply quantity of the first drying zone (101) by adjusting the temperature of the infrared heater (121) to be lower than the preset temperature and adjusting the fan speed (RPM) of the hot air blower (122) to be lower than the preset speed. In addition, the second adjustment part (600) may increase the heat supply quantities of the third and fourth drying zones (103, 104) by adjusting the temperature of the infrared heater (121) to be higher than the preset temperature and adjusting the fan speed (RPM) of the hot air blower (122) to be higher than the preset speed.

More specifically, the first adjustment part (500) lowers the temperature of the infrared heater (121) in the first drying zone (101) than the preset temperature by 4°C, and lowers the fan speed of the hot air blower (122) than the preset speed by 100RPM, and the second adjustment part (600) raises the temperature of the infrared heater (121) in the third and fourth drying zones (103, 104) than the preset temperature by 1 to 2°C, and raises the fan speed of the hot air blower (122) in the third and fourth drying zones (103, 104) than the preset speed by 25 to 50RPM, whereby the heat quantity compensation with respect to the reduced heat supply quantity in the first drying zone (101) may be performed.

In one example, the first adjustment part (500) may adjust the number of first drying zones based on the preset target adhesive force of the drying target electrode.

When the adhesive force of the drying target electrode that the drying has been completed sequentially through the plurality of drying zones is below the target adhesive force, the first adjustment part (500) may increase the number of the first drying zones (101) by adjusting the heat supply quantity in the first drying zone (101) to the first heat supply quantity (A) lower than the preset heat supply quantity.

In another example, the second adjustment part (600) may adjust the heat supply quantity (B) of the third drying zone (103) and the heat supply quantity (C) of the fourth drying zone (104), respectively, to be higher than the preset heat supply quantity, based on the difference between the drying rate (D1) of the drying target electrode that the drying has been completed sequentially through the plurality of drying zones and the preset target drying rate (D0).

For example, the second adjustment part (600) may adjust the heat supply quantity (B) of the third drying zone (103) and the heat supply quantity (C) of the fourth drying zone (104), respectively, to be higher than the preset heat supply quantity until the difference between the drying rate (D1) of the drying target electrode and the preset target drying rate (D0) is adjusted within the tolerance range. The second adjustment part (60) may repeatedly adjust the heat supply quantity of the third drying zone (103) and the heat supply quantity of the fourth drying zone (104) to be higher than the preset heat supply quantity by 25 to 50% of the first heat supply quantity (A) until the difference between the drying rate (D1) of the drying target electrode and the preset target drying rate (D0) is adjusted within the tolerance range.

For example, the second adjustment part (600) may adjust the drying rate (D1) of the drying target electrode to the preset target drying rate (D0) within the tolerance range by repeatedly increasing the temperature of the infrared heater (121) and the fan speed of the hot air blower (122) in the third drying zone (103) and the fourth drying zone (104). The tolerance range may be within a range of ±1%.

The target drying rate means a drying rate which prevents over-drying, un-drying, and heat wrinkles, where the electrode drying system according to the present invention may improve the quality of the product by adjusting the drying rate of the electrode to the target drying rate by means of heat quantity compensation in the third drying zone (103) and the fourth drying zone (104) through the second adjustment part (600) while securing the desired adhesive force through the first adjustment part (500).

In one specific example, the drying target electrode may be a negative electrode including a current collector and a negative electrode slurry layer provided on the current collector. The negative electrode may be a coated negative electrode coated with a negative electrode slurry layer, or a rolled negative electrode formed by rolling the coated negative electrode.

The negative electrode slurry may comprise a negative electrode active material, a binder, a conductive material, and a dispersion medium.

The negative electrode active material may include, for example, a carbon-based active material, a silicon-based active material, and the like, and specifically, may include artificial graphite, natural graphite, hard carbon, soft carbon, graphitized carbon fibers, graphitized mesocarbon microbeads, petroleum coke, a resin calcined body, carbon fibers, pyrolytic carbon, Si, silicon oxide represented by SiOx (0<x≤2), lithium titanium oxide (LTO), lithium metal, or two or more of the foregoing, but is not limited thereto.

As the binder, a variety of binder polymers, such as a polyvinylidene fluoride-hexafluoropropylene copolymer (PVDF-co-HEP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, styrene butylene rubber (SBR), fluoro-rubber, and various copolymers, may be used.

As the dispersion medium, N-methyl pyrrolidone, acetone, water, and the like may each independently be used.

The conductive material is not particularly limited as long as it has conductivity without causing a chemical change in the relevant battery, and for example, carbon black such as carbon black, acetylene black, Ketjen black, channel black, furnace black, lamp black, or thermal black; conductive fibers such as carbon fibers or metal fibers; metal powders such as fluorocarbon, aluminum, and nickel powders; conductive whiskers such as zinc oxide and potassium titanate; conductive metal oxides such as titanium oxide; conductive materials such as polyphenylene derivatives, and the like may be used.

In the negative electrode for which the constant rate section is designed pursuant to the drying system according to the present invention, the binder can be positioned in the inside of the active material layer without being distributed much on the surface of the slurry layer; the resistance characteristics can be improved because the electrode contact between the current collector and the slurry layer is stable; and the minimum adhesive force between the current collector and the slurry layer can be increased.

The present application also relates to an electrode drying method. The drying method uses the above-described electrode drying system. Accordingly, any description overlapping with the above-described contents will be omitted below.

The drying method comprises a determination step of determining a plurality of first drying zones (101) among a plurality of drying zones (100) in which a drying target electrode moves in a constant rate state (T state) where a change of a surface temperature is maintained below a predetermined value, and a first adjustment step of adjusting a heat supply quantity supplied from a heat supply part in each of the first drying zones (101), to increase or decrease the number of the first drying zones (101) determined in the determination step.

For example, the determination step may determine at least one drying zone located in the rear of a second drying zone (102) having the highest electrode surface temperature among the plurality of drying zones (100) as the first drying zone (101).

Specifically, a difference (T2-T1) between the electrode surface temperature (T2) of the second drying zone (102) and the electrode surface temperature (T1) of the first drying zone (101) may be 5°C or less.

In one example, the first adjustment step may adjust the heat supply quantity of each first drying zone to a first heat supply quantity (A) lower than the preset heat supply quantity, to increase the number of first drying zones determined in the determination step.

In addition, the drying method may comprise a second adjustment step of adjusting a heat supply quantity (B) of at least one third drying zone (103) located in the front of the first drying zone (101) and a heat supply quantity (C) of at least one fourth drying zone (104) located in the rear of the first drying zone (101), respectively, to be higher than the preset heat supply quantity, based on the first heat supply quantity (A).

The second adjustment step may be a heat quantity compensation step compensating for the heat supply quantity lowered by the first adjustment step.

In addition, the second control step may adjust the heat supply quantity (B) of the third drying zone (103) and the heat supply quantity (C) of the fourth drying zone (104), respectively, to be higher than the preset heat supply quantity, based on the difference between the drying rate (D1) of the drying target electrode in which the drying has been completed sequentially through the plurality of drying zones (100), and the preset target drying rate (D0).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to an electrode drying system related to one example of the present invention, there is an advantage in which the drying quality of the electrode, efficiency of the drying process, and productivity of the drying process are excellent.

## Claims

1. An electrode drying system, comprising:
a plurality of drying zones, which are disposed along one direction, each including a drying space in which a drying target electrode is dried and a heat supply part provided to provide a preset heat supply quantity to the drying space;
a moving part moving the drying target electrode to be dried sequentially through the plurality of drying zones;
a plurality of temperature sensors provided in each of the plurality of drying zones and measuring a surface temperature of the drying target electrode in each of the drying zones;
a determining part determining a plurality of first drying zones among the plurality of drying zones in which the drying target electrode moves in a constant rate state where a change of the surface temperature is maintained below a predetermined value based on the surface temperature of the drying target electrode measured by the plurality of temperature sensors; and
a first adjustment part provided to adjust the heat supply quantity supplied from the heat supply part in each of the first drying zones, to increase or decrease the number of first drying zones determined in the determining part.

2. The electrode drying system according to claim 1, wherein
the determining part determines at least one drying zone located in the rear of a second drying zone having the highest electrode surface temperature among the plurality of drying zones as the first drying zones.

3. The electrode drying system according to claim 2, wherein
a difference (T2-T1) between the electrode surface temperature (T2) of the second drying zone and the electrode surface temperature (T1) of the first drying zone is 5°C or less.

4. The electrode drying system according to claim 1, wherein
the first adjustment part adjusts the heat supply quantity of each first drying zone to a first heat supply quantity lower than the preset heat supply quantity, to increase the number of first drying zones determined in the determining part.

5. The electrode drying system according to claim 4, comprising
a second adjustment part adjusting a heat supply quantity of at least one third drying zone located in the front of the first drying zone and a heat supply quantity of at least one fourth drying zone located in the rear of the first drying zone, respectively, to be higher than the preset heat supply quantity, based on the first heat supply quantity.

6. The electrode drying system according to claim 5, wherein
the second adjustment part adjusts the heat supply quantity of the third drying zone to a second heat supply quantity higher than the preset heat supply quantity by 25% to 50% of the first heat supply quantity, and adjusts the heat supply quantity of the fourth drying zone to a third heat supply quantity higher than the preset heat supply quantity by 25% to 50% of the first heat supply quantity.

7. The electrode drying system according to claim 5, wherein
the second adjustment part adjusts the heat supply quantity of the third drying zone and the heat supply quantity of the fourth drying zone, respectively, to be higher than the preset heat supply quantity, based on a difference between a drying rate of the drying target electrode in which the drying has been completed sequentially through the plurality of drying zones and a preset target drying rate.

8. The electrode drying system according to claim 7, wherein
the second adjustment part adjusts the heat supply quantity of the third drying zone and the heat supply quantity of the fourth drying zone, respectively, to be higher than the preset heat supply quantity, until the difference between the drying rate of the drying target electrode and the preset target drying rate is adjusted within a tolerance range.

9. The electrode drying system according to claim 1, wherein
the drying target electrode is a negative electrode comprising a current collector and a negative electrode slurry layer provided on the current collector.

10. An electrode drying method using the electrode drying system according to claim 1, comprising:
a determination step of determining a plurality of first drying zones among a plurality of drying zones in which a drying target electrode moves in a constant rate state where a change of a surface temperature is maintained below a predetermined value; and
a first adjustment step of adjusting a heat supply quantity supplied from a heat supply part in each of the first drying zones, to increase or decrease the number of the first drying zones determined in the determination step.

11. The electrode drying method according to claim 10, wherein
the determination step determines at least one drying zone located in the rear of a second drying zone having the highest electrode surface temperature among the plurality of drying zones as the first drying zone.

12. The electrode drying method according to claim 11, wherein
a difference (T2-T1) between the electrode surface temperature (T2) of the second drying zone and the electrode surface temperature (T1) of the first drying zone is 5°C or less.

13. The electrode drying method according to claim 10, wherein
the first adjustment step adjusts the heat supply quantity of each first drying zone to a first heat supply quantity lower than the preset heat supply quantity, to increase the number of first drying zones determined in the determination step.

14. The electrode drying method according to claim 13, comprising
a second adjustment step of adjusting a heat supply quantity of at least one third drying zone located in the front of the first drying zone and a heat supply quantity of at least one fourth drying zone located in the rear of the first drying zone, respectively, to be higher than the preset heat supply quantity, based on the first heat supply quantity.
